# EUROPÄISCHE PATENTSCHRIFT

(11) **EP 2 162 610 B1**
(45) Veröffentlichungstag und Bekanntmachung des Hinweises auf die Patenterteilung: **20.07.2011**
(21) Anmeldenummer: 08748901.9
(22) Anmeldetag: 12.04.2008
(51) Int. Cl.: F02D 41/00, F02D 41/22, F02D 41/30, F02D 19/06, F02M 53/04

(54) **VERFAHREN ZUM BETREIBEN EINER BRENNKRAFTMASCHINE**
METHOD FOR OPERATING AN INTERNAL COMBUSTION ENGINE
PROCÉDÉ PERMETTANT DE FAIRE FONCTIONNER UN MOTEUR À COMBUSTION INTERNE

(30) Priorität: 30.05.2007 DE 102007025075
(43) Veröffentlichungstag der Anmeldung: 17.03.2010
(73) Patentinhaber: Volkswagen Aktiengesellschaft, 38436 Wolfsburg (DE)
(72) Erfinder: POTT, Ekkehard, 38518 Gifhorn (DE); FLADUNG, Oliver, 38122 Braunschweig (DE); THEOBALD, Jörg, 38165 Lehre (DE)
(86) Internationale Anmeldenummer: PCT/EP2008/002921
(87) Internationale Veröffentlichungsnummer: WO 2008/145227

(56) Entgegenhaltungen:
- EP-A- 1 344 920
- WO-A-03/027473
- DE-A1- 19 945 813
- DE-A1- 19 958 177

## Beschreibung

Die Erfindung betrifft ein Verfahren zum Betreiben einer Brennkraftmaschine in Form eines Ottomotors, insbesondere eines Kraftfahrzeugs, wobei Öttokraftstoff, insbesondere Benzin oder Ethanol (E85), mittels wenigstens eines Kraftstoffinjektors direkt in wenigstens einen Brennraum der Brennkraftmaschine eingespritzt wird und wobei wahlweise anstatt des Einspritzens von Ottokraftstoff oder zusätzlich zum Einspritzen von Ottokraftstoff die Brennkraftmaschine mit Gas, insbesondere CNG (Compressed Natural Gas) oder LPG (Liquified Petroleum Gas), betrieben wird, wobei während des Betriebs der Brennkraftmaschine mit Ottokraftstoff laufend ein Gemischadaptionswert bestimmt wird, gemäß dem Oberbegriff des Patentanspruchs 1.

Bei einem Ottomotor mit Benzindirekteinspritzung münden die Hochdruckeinspritzinjektoren zur Einspritzung von flüssigen Ottomotorenkraftstoffen direkt in den Brennraum. Infolgedessen werden die Injektoren beim Betrieb des Motors durch die im Brennraum stattfindende Verbrennung mit heißen Verbrennungsgasen beaufschlagt und heizen sich auf. Gekühlt werden die Injektoren durch den eingespritzten Kraftstoff sowie die in direkter Umgebung zum Injektor verlaufenden Wasserkanäle der Motorkühlung. Beim Betrieb eines solchen direkteinspritzenden Ottomotors mit CNG (Compressed Natural Gas), wie beispielsweise aus der EP 0 718 484 B1 bekannt, besteht die Gefahr, dass sich während des CNG-Betriebes die Hochdruckinjektoren aufgrund des fehlenden Durchsatzes von flüssigem Kraftstoff erhitzen und infolge dessen geschädigt werden bzw. der sich noch im Innern der Injektoren befindende Kraftstoff Ablagerungen bildet, die sich wiederum negativ auf das Injektorverhalten auswirken. Je länger der Gasbetrieb mit deaktivierter Benzineinspritzung andauert, umso höher ist die Gefahr, dass Ablagerungen aus dem stehenden Kraftstoff innerhalb des Injektors auftreten, die einen korrekten Betrieb des Injektors beeinträchtigen.

Aus der EP 1 344 920 A2 ist ein Verfahren zur Steuerung und/oder Diagnose eines Kraftstoffzumesssystems bekannt. Hierbei wird eine Verschmutzung eines Einspritzventils durch eine Auswertung von Ausgangswerten der Gemischadaptionsfunktion erkannt.

Der Erfindung liegt die Aufgabe zugrunde, ein Verfahren der o.g. Art hinsichtlich der Funktionssicherheit der Kraftstoffinjektoren zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass ein aktueller Gemischadaptionswert während des Betriebs der Brennkraftmaschine mit Ottokraftstoff in einem Speicher gespeichert wird und nach einer vorbestimmten Mindestbetriebsdauer mit Gas ein aktueller Gemischadaptionswert während des Betriebs der Brennkraftmaschine mit Ottokraftstoff mit dem gespeicherten Gemischadaptionswert verglichen wird, wobei eine Spülung der Kraftstoffinjektoren durchgeführt wird, wenn eine Differenz zwischen dem aktuellen Gemischadaptionswert und dem gespeicherten Gemischadaptionswert einen vorbestimmten Differenzwert überschreitet.

Dies hat den Vorteil, dass über die Veränderung des Gemischadaptionswertes ggf. an bzw. in den Kraftstoffinjektoren vorhandene Ablagerungen erkannt werden und eine ggf. erforderliche Reinigung der Kraftstoffinjektoren initiiert wird. Dies erzielt eine Robustheitssteigerung bivalenter Gasmotoren durch einen Minderung nachhaltiger Verkokungen an den Kraftstoffinjektoren.

Zur Reinigung der Kraftstoffinjektoren wird zum Spülen durch jeden Kraftstoffinjektor eine Menge eines Spülfluides, insbesondere des Ottokraftstoffes, durch einen Kraftstoffinjektor geleitet, die einem 50- bis 50.000-fachen, insbesondere einem 200- bis 1.000-fachen des in einem Kraftstoffinjektor gespeicherten Volumens von Ottokraftstoff entspricht.

Zweckmäßigerweise beträgt die vorbestimmte Mindestbetriebsdauer mit Gas 200 Sekunden bis 40.000 Sekunden, insbesondere 2.000 Sekunden bis 10.000 Sekunden, insbesondere 5.000 Sekunden.

Zweckmäßigerweise wird nach Ablauf der vorbestimmten Mindestbetriebsdauer mit Gas die Brennkraftmaschine mit Ottokraftstoff betrieben und der aktuelle Gemischadaptionswert bestimmt.

Um eine erfolgreiche oder ggf. nicht erfolgreiche Spülung der Injektoren zu erkennen, wird nach Durchführung einer Spülung, ein aktueller Gemischadaptionswert bestimmt und mit dem vor der Spülung ermittelten Gemischadaptionswert verglichen, wobei ein Fehler festgestellt wird, wenn eine Differenz zwischen dem aktuellen Gemischadaptionswert nach der Spülung und dem Gemischadaptionswert vor der Spülung kleiner als ein vorbestimmter Wert ist. Im Fehlerfall wird zur Vermeidung von weiteren Ablagerungen an den Kraftstoffinjektoren ein weiterer Betrieb der Brennkraftmaschine mit CNG gesperrt.

Beispielsweise erfolgt die Speicherung eines aktuellen Gemischadaptionswertes nach Zuführung von neuem Ottokraftstoff in einen Kraftstofftank, nach jeder oder einer vorbestimmten Anzahl von Vergleichen eines aktuellen Gemischadaptionswertes mit dem gespeicherten Adaptionswert, nach jedem oder einer vorbestimmten Zahl von Startvorgängen der Brennkraftmaschine, nach jedem oder einer vorbestimmen Anzahl von Fahrzyklen, nach jeder erfolgreichen Spülung der Kraftstoffinjektoren und/oder nach einer vorbestimmten Anzahl von erfolgreichen Spülungen der Kraftstoffinjektoren.

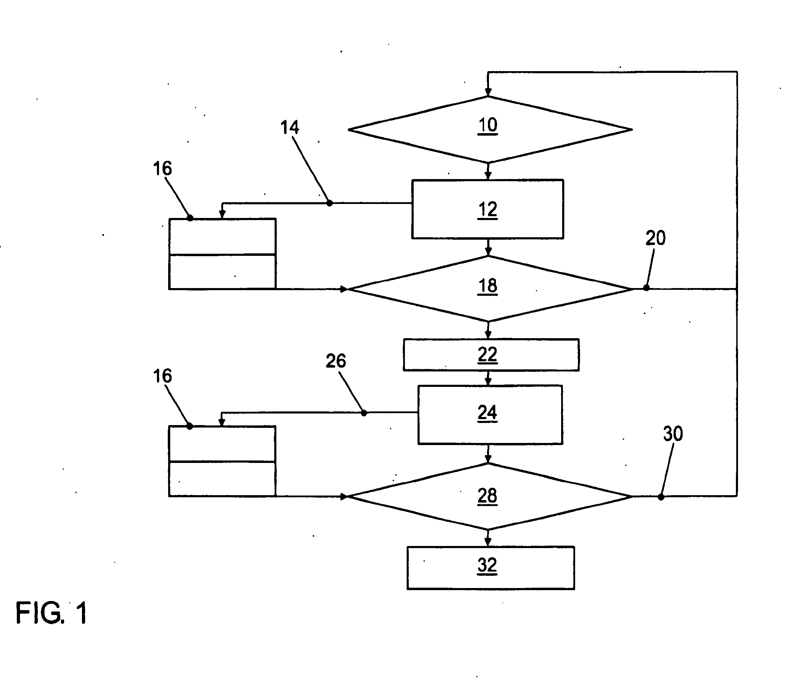

Die Erfindung wird im Folgenden anhand der Zeichnung näher erläutert. Diese zeigt in der einzigen Fig. ein schematisches Flussdiagramm einer bevorzugten Ausführungsform eines erfindungsgemäßen Verfahrens.

Nachfolgend wird eine beispielhafte Ausführungsform eines erfindungsgemäßen Verfahrens zum Betreiben einer bivalenten Brennkraftmaschine, d.h. einer Brennkraftmaschine, welche wahlweise mit einem aus Kraftstoffinjektoren in Brennräume der Brennkraftmaschine eingespritzten Ottokraftstoff (Benzin, Ethanol) oder mit In ein Saugrohr der Brennkraftmaschine eingebrachtes Gas (CNG oder LPG) betreibbar ist, beschrieben.

Bei dem beispielhaften, in der einzigen Fig. dargestellten Verfahrensablauf wird in einem Schritt 10 "Mindestdauer im Gasbetrieb erreicht?" geprüft, ob eine vorbestimmte Mindestbetriebsdauer eines Betriebs der Brennkraftmaschine mit Gas erreicht ist. Ist dies der Fall, so erfolgt in einem nachfolgenden Schritt 12 "Ermittlung Gemischadaptionswert" eine Ermittlung eines aktuellen Gemischadaptionswertes im reinen Ottokraftstoffbetrieb. Dieser so ermittelte, aktuelle Gemischadaptionswert wird über Verzweigung 14 in einem Schiebespeicher 16, gespeichert. In dem Schiebespeicher 16 wird dieser aktuelle Gemischadaptionswert mit einem zuvor in einem nicht flüchtigen Speicher gespeicherten Gemischadaptionswert verglichen und das Ergebnis des Vergleichs an den nachfolgenden Schritt 18 "Abweichung zum Vorwert größer als Schwellwert" übertragen. Im Schritt 18 wird bestimmt, ob eine Differenz zwischen dem aktuellen Gemischadaptionswert aus Schritt 12 und dem gespeicherten Gemischadaptionswert größer als ein vorbestimmter Schwellwert ist. Ist das Ergebnis "nein", so Erfolgt über Verzweigung 20 ein Rücksprung zu Schritt 10 und es wird erneut die vorbestimmte Mindestbetriebsdauer für den Gasbetriebs abgewartet, bis das Verfahren erneut mit Schritt 12 startet. Ist das Ergebnis in Schritt 18 "ja", so wird in einem nachfolgenden Schritt 22 "Spülung Injektor" eine Spülung der Kraftstoffinjektoren durchgeführt.

Im Anschluss an die Spülung gemäß Schritt 22 wird in einem nachfolgenden Schritt 24 "Ermittlung Gemischadaptionswert" erneut ein Gemischadaptionswert ermittelt und über Verzweigung 26 in dem Schiebespeicher 16, gespeichert. In dem Schiebespeicher 16 wird dieser aktuelle Gemischadaptionswert mit dem zuvor in dem nicht flüchtigen Speicher gespeicherten Gemischadaptionswert verglichen und das Ergebnis des Vergleichs an den nachfolgenden Schritt 28 "Reinigung Erfolgreich?" übertragen. Hierbei wird geprüft, ob eine Differenz zwischen dem Gemischadaptionswert aus Schritt 24 und dem gespeicherten Gemischadaptionswert kleiner ist als ein vorbestimmter Schwellwert. Dieser kann beispielsweise derselbe Schwellwert wie in Schritt 18 sein. Ist das Ergebnis dieser Prüfung "ja", dann wird über Verzweigung 30 zurück zu Schritt 10 gesprungen und es wird erneut die vorbestimmte Mindestbetriebsdauer für den Gasbetrieb abgewartet, bis das Verfahren erneut mit Schritt 12 startet. Ist das Ergebnis in Schritt 28 "nein", so wird in einem nachfolgenden Schritt 32 "Sperrung Gasbetrieb" der Betrieb der Brennkraftmaschine mit Gas gesperrt, so dass diese nur noch mit Ottokraftstoff betrieben wird, bis das Problem der Ablagerungen in den Kraftstoffinjektoren ggf. in einer Werkstatt beseitigt worden ist.

Erfindungemäß wird somit die Verkokung von beispielsweise Benzindirekteinspritzinjektoren bei CNG-Gasmotoren überwacht. Mit den periodischen Spülvorgängen durch periodisches kurzzeitiges Umschalten auf Benzinbetrieb wird eine Minderung des Risikos von nachhaltigen Verkokungen erreicht. Erfindungsgemäß wird der Betrieb der Brennkraftmaschine in der oben beschriebenen Weise überwacht und die genannte Prophylaxemaßnahme nach Bedarf aktiviert. Dazu werden die Gemischadaptionswerte im reinen Benzinbetrieb in einem nichtflüchtigen Speicher abgelegt und bei reinem Benzinbetrieb wird nach der vorgebbaren Mindestbetriebsdauer im Gasbetrieb der aktuelle Gemischadaptionswert mit dem Vorgängerwert verglichen. Die Mindestbetriebsdauer beträgt beispielhaft 200 bis 40.000 Sekunden, insbesondere 2.000 bis 10.000 Sekunden, insbesondere um 5.000 Sekunden. Ggf. kann sich diese Mindestbetriebsdauer erst über mehrere Betriebszyklen der Brennkraftmaschine oder mehrere Fahrzyklen eines mit der Brennkraftmaschine ausgerüsteten Kraftfahrzeugs kumulieren.

übersteigt der Anstieg der Gemischadaptionswerte einen vorgebbaren Schwellwert und/oder eine vorgebbare Abweichung ggü. dem vorherigen Wert, so liegt mit hoher Wahrscheinlichkeit eine Verkokung des Kraftstoffinjektors vor. In diesem Falle wird unabhängig vom Betriebszustand des Motors ein Sonder-Spülvorgang eingeleitet, der das 50- bis 50.000-fache des Injektorvolumens, insbesondere das 200- bis 1.000-fache des Injektorvolumens umfasst. Ist nach dieser Prozedur keine Minderung des Gemischadaptionsfaktors um einen vorgebbaren Schwellwert zu beobachten, wird eine Information im Fehlerspeicher des Motorsteuergerätes abgelegt. Alternativ oder zusätzlich wird der Gasbetrieb des Motors eingeschränkt oder unterdrückt.

Bei zwischenzeitlicher Betankung eines mit der Brennkraftmaschine ausgerüsteten Fahrzeugs mit Ottokraftstoff wird die Überwachung des Gemischadaptionswertes unterdrückt, da über die Betankung ggf. eine abweichende Kraftstoffqualität nachgefüllt wird, was zu einem veränderten Gemischadaptionswert führt.

## Patentansprüche

1. Verfahren zum Betreiben einer Brennkraftmaschine in Form eines Ottomotors, insbesondere eines Kraftfahrzeugs, wobei Ottokraftstoff, insbesondere Benzin öder Ethanol (E85), mittels wenigstens eines Kraftstoffinjektors direkt in wenigstens einen Brennraum der Brennkraftmaschine eingespritzt wird, wobei während des Betriebs der Brennkraftmaschine mit Ottokraftstoff laufend ein Gemischadaptionswert bestimmt wird, wobei ein aktueller,Gemischadaptionswert während des Betriebs der Brennkraftmaschine mit Ottokraftstoff in einem Speicher gespeichert wird, **dadurch gekennzeichnet, dass** wahlweise anstatt des Einspritzens von Ottokraftstoff oder zusätzlich zum Einspritzen von Ottokraftstoff die Brennkraftmaschine mit Gas, insbesondere CNG (Compressed Natural Gas) oder LPG (Liquified Petroleum Gas), betrieben wird und nach einer vorbestimmten Mindestbetriebsdauer mit Gas die Brennkraftmaschine mit Ottokraftstoff betrieben und der aktuelle Gemischadaptionswert bestimmt wird und dieser aktuelle mit dem gespeicherten Gemischadaptionswert verglichen wird, wobei eine Spülung der Kraftstoffinjektoren durchgeführt wird, wenn eine Differenz zwischen dem aktuellen Gemischadaptionswert und dem gespeicherten Gemischadaptionswert einen vorbestimmten Differenzwert überschreitet.

2. Verfahren nach Anspruch 1, **dadurch gekennzeichnet, dass** zum Spülen durch jeden Kraftstoffinjektor eine Menge eines Spülfluides, insbesondere des Ottokraftstoffes, durch einen Kraftstoffinjektor geleitet wird, die einem 50- bis 50.000-fachen, insbesondere einem 200- bis 1.000-fachen des in einem Kraftstoffinjektor gespeicherten Volumens von Ottokraftstoff entspricht.

3. Verfahren nach wenigstens einem der vorhergehenden Ansprüche, **dadurch gekennzeichnet, dass** die vorbestimmte Mindestbetriebsdauer mit Gas 200 Sekunden bis 40.000 Sekunden, insbesondere 2.000 Sekunden bis 10.000 Sekunden, insbesondere 5.000 Sekunden, beträgt.

4. Verfahren nach wenigstens einem der vorhergehenden Ansprüche, **dadurch gekennzeichnet, dass** nach Durchführung einer Spülung, ein aktueller Gemischadaptionswert bestimmt und mit dem vor der Spülung ermittelten Gemischadaptionswert verglichen wird, wobei ein Fehler festgestellt wird, wenn eine

5. Verfahren nach Anspruch 4, **dadurch gekennzeichnet, dass** für den Fall, dass ein Fehler festgestellt wurde, ein weiterer Betrieb der Brennkraftmaschine mit Gas gesperrt wird. Differenz zwischen dem aktuellen Gemischadaptionswert nach der Spülung und dem Gemischadaptionswert vor der Spülung kleiner als ein vorbestimmter Wert ist.

6. Verfahren nach wenigstens einem der vorhergehenden Ansprüche, **dadurch gekennzeichnet, dass** die Speicherung eines aktuellen Gemischadaptionswertes nach Zuführung von neuem Ottokraftstoff in einen Kraftstofftank, nach jeder oder einer vorbestimmten Anzahl von Vergleichen eines aktuellen Gemischadaptionswertes mit dem gespeicherten Adaptionswert, nach jedem oder einer vorbestimmten Zahl von Startvorgängen der Brennkraftmaschine, nach jedem oder einer vorbestimmen Anzahl von Fahrzyklen, nach jeder erfolgreichen Spülung der Kraftstoffinjektoren und/oder nach einer vorbestimmten Anzahl von erfolgreichen Spülungen der Kraftstoffinjektoren erfolgt.

## Claims

1. Method for operating an internal combustion engine in the form of a carburettor engine, in particular of a motor vehicle, carburettor fuel, in particular gasoline or ethanol (E85), being injected directly into at least one combustion space of the internal combustion engine by means of at least one fuel injector, a mixture adaptation value being determined continuously while the internal combustion engine is operated with carburettor fuel, a current mixture adaptation value being stored in a memory while the internal combustion engine is operated with carburettor fuel, **characterized in that** selectively, the internal combustion engine being operated with gas, in particular CNG (Compressed Natural Gas) or LPG (Liquefied Petroleum Gas) instead of the injection of carburettor fuel or in addition to the injection of carburettor fuel, and, after a predetermined minimum operating duration with gas the internal combustion engine is operated with carburettor fuel, and the current mixture adaptation value is determined and this current mixture adaptation value is compared with the stored mixture adaptation value during the operation of the internal combustion engine with carburettor fuel, a scavenging of the fuel injectors being carried out when a difference between the current mixture adaptation value and the stored mixture adaptation value overshoots a predetermined differential value.

2. Method according to Claim 1, **characterized in that**, for scavenging through each fuel injector, a quantity of a scavenging fluid, in particular of the carburettor fuel, is conducted through a fuel injector, which quantity corresponds to 50 to 50,000 times, in particular 200 to 1,000 times, the volume of carburettor fuel stored in a fuel injector.

3. Method according to at least one of the preceding claims, **characterized in that**, the predetermined minimum operating duration with gas amounts to 200 seconds to 40,000 seconds, in particular 2,000 seconds to 10,000 seconds, in particular 5,000 seconds.

4. Method according to at least one of the preceding claims, **characterized in that**, after a scavenging has been carried out, a current mixture adaptation value is determined and is compared with the mixture adaptation value ascertained before scavenging, a fault being established when difference between the current mixture adaptation value after scavenging and the mixture adaptation value before scavenging is lower than the predetermined value.

5. Method according to Claim 4, **characterized in that**, in the event that a fault has been established, further operation of the internal combustion engine with gas is blocked.

6. Method according to at least one of the preceding claims, **characterized in that**, the storage of a current mixture adaptation value takes place after the supply of new carburettor fuel into a fuel tank, after each or a predetermined number of comparisons of a current mixture adaptation value with the stored adaptation value, after each or a predetermined number of starting actions of the internal combustion engine, after each or a predetermined number of driving cycles, after each successful scavenging of the fuel injectors and/or after a predetermined number of successful scavengings of the fuel injectors.

## Revendications

1. Procédé pour faire fonctionner un moteur à combustion sous la forme d'un moteur à allumage commandé, notamment d'un véhicule automobile, du carburant pour moteur, notamment de l'essence ou de l'éthanol (E85) étant injecté au moyen d'au moins un injecteur de carburant directement dans au moins une chambre de combustion du moteur à combustion, une valeur 'd'adaptation du mélange étant continuellement déterminée pendant le fonctionnement du moteur à combustion avec du carburant pour moteur, une valeur d'adaptation du mélange actuelle étant enregistrée dans une mémoire pendant le fonctionnement du moteur à combustion avec du carburant pour moteur, **caractérisé en ce que** le moteur à combustion, à la place de l'injection de carburant pour moteur ou, au choix, en complément de l'injection de carburant pour moteur, fonctionne avec du gaz, notamment du GNC (gaz naturel comprimé) ou du GPL (gaz de pétrole liquéfié) et, après une durée de fonctionnement minimale prédéfinie avec du gaz, le moteur à combustion fonctionne avec du carburant pour moteur et la valeur d'adaptation du mélange actuelle est déterminée et cette valeur actuelle est comparée avec la valeur d'adaptation du mélange enregistrée, un rinçage des injecteurs de carburant étant effectué lorsqu'une différence entre la valeur d'adaptation du mélange actuelle et la valeur d'adaptation du mélange enregistrée dépasse une valeur de différence prédéfinie.

2. Procédé selon la revendication 1, **caractérisé en ce que** le rinçage à travers chaque injecteur de carburant s'effectue en acheminant à travers un injecter de carburant une quantité de fluide de rinçage, notamment de carburant pour moteur, qui correspond à 50 à 50 000 fois, notamment de 200 à 1000 fois le volume de carburant pour moteur accumulé dans un injecteur de carburant.

3. Procédé selon au moins l'une des revendications précédentes, **caractérisé en ce que** la durée de fonctionnement minimale prédéfinie avec du gaz est de 200 secondes à 40 000 secondes, notamment de 2000 secondes à 10 000 secondes, notamment de 5000 secondes.

4. Procédé selon au moins l'une des revendications précédentes, **caractérisé en ce qu'**après avoir effectué' un rinçage, une valeur d'adaptation du mélange actuelle est déterminée et comparée avec la valeur d'adaptation du mélange déterminée avant le rinçage, une erreur étant constatée si une différence entre la valeur d'adaptation du mélange actuelle après le rinçage et la valeur d'adaptation du mélange avant le rinçage est inférieure à une valeur prédéfinie.

5. Procédé selon la revendication 4, **caractérisé en ce que** dans le cas où une erreur a été constatée, une poursuite du fonctionnement du moteur à combustion avec du gaz est bloquée.

6. Procédé selon au moins l'une des revendications précédentes, **caractérisé en ce que** l'enregistrement d'une valeur d'adaptation du mélange actuelle s'effectue après l'arrivée de carburant pour moteur neuf dans un réservoir à carburant, après chaque ou après un nombre prédéfini de comparaisons entre une valeur d'adaptation du mélange actuelle et la valeur d'adaptation enregistrée, après chaque ou après un nombre prédéfini d'opérations de démarrage du moteur à combustion, après chaque ou après un nombre prédéfini de cycles de déplacement, après chaque rinçage réussi des injecteurs de carburant et/ou après un nombre prédéfini de rinçages réussis des injecteurs de carburant.
